Europäisches Patentamt

European Patent Office

Office européen des brevets

(19)

(11) Publication number: **0 453 570 A1**

(12) **EUROPEAN PATENT APPLICATION**
**published in accordance with Art.**
**158(3) EPC**

(21) Application number: 90915814.9

(22) Date of filing: 24.10.90

(86) International application number:
PCT/JP90/01376

(87) International publication number:
WO 91/07707 (30.05.91 91/12)

(51) Int. Cl.⁵: **G05B 19/403, G05B 19/18**

(30) Priority: 14.11.89 JP 295277/89

(43) Date of publication of application:
**30.10.91 Bulletin 91/44**

(84) Designated Contracting States:
**DE FR GB**

(71) Applicant: **FANUC LTD.**
**3580, Shibokusa Aza-Komanba, Oshino-mura**
**Minamitsuru-gun, Yamanashi 401-05(JP)**

(72) Inventor: **FUJITA, Naoki Fanuc Mansion**
**Harimomi 6-203**
**3537-1, Shibokusa Oshinomura**
**Minamitsuru-gun Yamanashi 401-05(JP)**
Inventor: **MATSUMURA, Teruyuki**
**38-8, Matsugaya Hachioji-shi**
**Tokyo 192-03(JP)**
Inventor: **NAGASHIMA, Noritake Fanuc**
**Mansion Harimomi 8-303**
**3511-1, Shibokusa Oshinomura**
**Minamitsuru-gun Yamanashi 401-05(JP)**

(74) Representative: **Brunner, Michael John et al**
**GILL JENNINGS & EVERY 53-64 Chancery**
**Lane**
**London WC2A 1HN(GB)**

(54) NC PROGRAM PREPARATION METHOD OF INTERACTIVE NUMERIC CONTROLLER OR AUTOMATIC PROGRAMMING APPARATUS.

(57) This invention relates to a method of preparing an interactive numeric controller program for a 2-spindle 2-turret 4-axis lathe on the basis of the shapes of a product and work which undergoes primary and secondary machining. The point between the primary and secondary machining processes is determined (S1, S2, S3) on the basis of the data of the inputted shape constituent elements of the product and work. This point in the NC program is selected (S4-S10) so that the time necessary for the primary and secondary machining is substantially equal. In this manner the NC program for the 4-axis lathe having high efficiency can be prepared.

```
                    ( START )
                         |
              DEFINITION  OF        ~ S 1
              MATERIAL  SHAPE
                         |
              DEFINITION  OF        ~ S 2
              PART  SHAPE
                         |
              AUTOMATIC  CAL-       ~ S 3
              CULATION  OF
              SPLITTING  POINT
                         |
       YES          PROP-           ~ S 4
     <──────<    ER  SPLITTING  >
     |              POINT?
     |                 | NO                                    |
     |                 |                                       |
     |        MANUAL  SETTING       ~ S 5                      |
     |        OF  SPLITTING                                    |
     |        POINT                                            |
     |                 |                                       |
     └────────>        |                                       |
              DETERMINE  PRI-       ~ S 6                       |
              MARY  AUTOMATIC                                  |
              MACHINNING                                       |
                         |                                     |
   S 7 ~     DETERMINE  SEC-                                   |
             ONDARY  AUTO-                                     |
             MATIC  MACHINNING                                 |
                         |               ┌─────────┐          |
   S 8 ~     DISPLAY  PRIMARY            /   S 9     \ NO       |
             & SECONDARY        <──────<    OK ?     >─────────┘
             MACHINNING  TIMES           \           /
                                          └────┬────┘
                                            YES |    S 1 0
                                         OUTPUT  PRIMARY
                                         & SECONDARY
                                         NC  STATEMENTS
                                               |
                                           ( END )
```

F I G. 1

Technical Field

The present invention relates to an interactive numerical control device or an automatic programming device, and more particularly, to a method of preparing an NC program for an interactive numerical control device or an automatic programming device used for preparing an NC program for a four-axis lathe with two spindles and two turrets.

Background Art

An interactive numerical control device or an automatic programming device is widely used for the control of various machine tools, since an NC program can be easily prepared even if an operator is not familiar with the language codes or NC tape formats, etc. of an automatic programming.

In this connection, a four-axis lathe with two spindles and two turrets has been used as a CNC lathe having a plurality of heads, to improve the machining efficiency. This type of four-axis lathe carries out a primary machining with one head, and then carries out a secondary machining (sometimes referred to as back machining) with the other head.

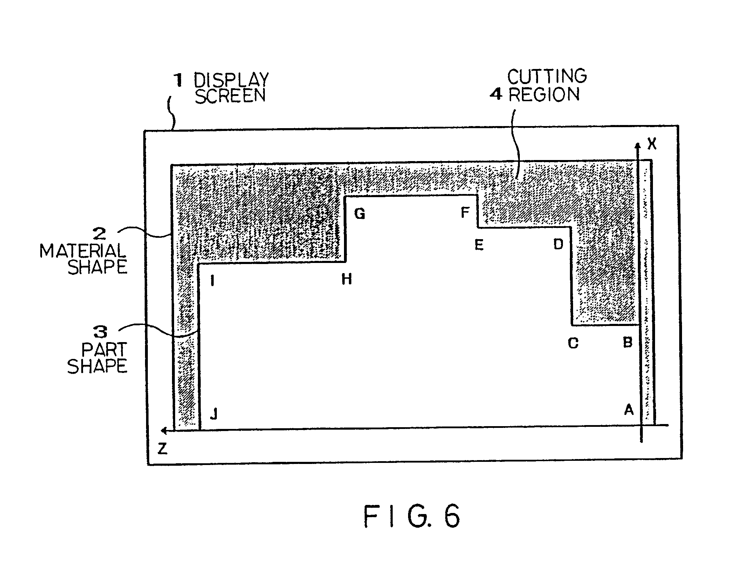

Figure 6 is a diagram for explaining the outline of a machining with a four-axis lathe with two spindles and two turrets. First, at a first head, a workpiece 42a held by a chuck 41a is machined to a desired contour with a tool 44a mounted on a turret 43a. This machining at the first head is referred to as a primary machining. Next, at a second head, the workpiece 42a is moved from the chuck 41a to a chuck 41b, and a workpiece 42b caught by the chuck 41b is machined to a desired contour' with a tool 44b mounted on a turret 43b. This machining at the second head is referred to as a secondary machining.

When an NC program for such a four-axis lathe with two spindles and two turrets is to be prepared using an interactive numerical control device or an automatic programming device, the NC program for the primary machining and that for the secondary machining must be prepared separately.

In this connection, for such a four-axis lathe with two spindles and two turrets, preferably the time required for the primary machining and the time required for the secondary machining are made the same. Namely, the overall machining time can be reduced and machining efficiency can be improved by making the machining time for the primary and the secondary machining the same when a workpiece is machined while continuously changing the position in which it is held.

Accordingly, when an NC program is prepared using an interactive numerical control device or an automatic programming device, a zone for the primary machining (primary machining zone) and a zone for the secondary machining (secondary machining zone) must be set such that machining times for the primary and the secondary machining become the same.

The interactive numerical control device or the automatic programming device employs a method of inputting a part shape by inputting shape components using symbolic keys. This is used to prepare a machining program by inputting a part shape using symbolic keys by which shape components such as a horizontal line, vertical line, oblique line, partial arc, etc. can be input. This method has an advantage in that an NC program can be easily and efficiently prepared because a shape of a part can be easily input.

Nevertheless, in the case of a four-axis lathe with two spindles and two turrets, the primary machining zone and the secondary machining zone must be set, and at this time, a problem arises in that the machining zones cannot be set such that the machining times for the primary and the secondary machining become the same since a part shape is composed of several shape components.

This problem will be explained with reference to the drawings.

Figure 6 is a diagram showing a material shape, and a part shape input through the symbolic keys. In this figure, only a display screen 1 is shown and the input keys, etc. are omitted.

The display screen 1 shows a material shape 2 defined by a rectangle and a part shape 3 surrounded by a line segment (shape components) from a point A to a point J, within this material shape 2. The shaded section in the figure is a machining cutting zone 4 to be cut with a tool. In this figure, X refers to the X-axis direction and Z to the Z-axis direction of a four-axis lathe.

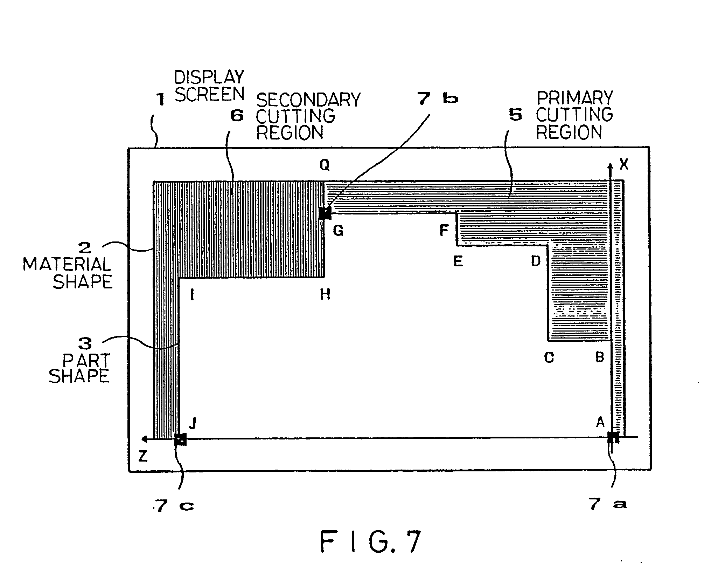

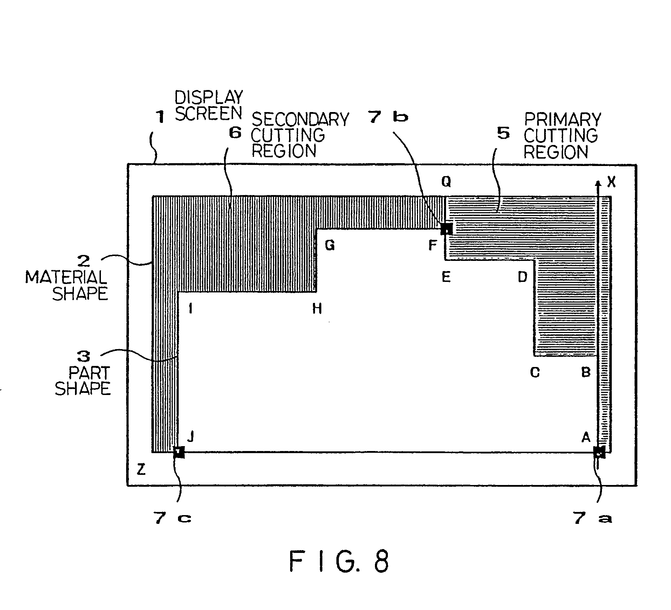

Figures 7 and 8 are diagrams showing the display at display screens when the cutting zones of the primary and the secondary machining are set. Namely, after the material shape 2 and the part shape 3 are defined as in Fig. 6, the primary machining zone is set, and therefore, first a cursor 7a is moved to the point A on the part shape 3, and a starting point for a splitting is set by pushing a right arrow key. Next, a cursor 7b is moved to a point G, and an end point of a splitting is set by pushing an upper arrow key. By this operation, a zone surrounded by points A - B - C - D - E - F - G - Q - X (lateral line section) is set as a primary machining cutting zone 5. Then, a cursor 7c is moved to the point J, and a zone surrounded by points Q - G - H - I - J - Z (longitudinal line section) is set as a secondary machining cutting zone 6, by pushing a left arrow key.

Figure 8 shows a case where in the point F is set as a splitting point by the same operation, and

3

the primary machining cutting zone 5 is surrounded by the points A - B - C - D - E - F - Q - X (lateral line section) and the secondary machining cutting zone 6 is surrounded by the points Q - F - G - H - I - J - Z (longitudinal line section).

In this way, because the part shape has been composed of the shape components, cursors could be set only on the intersections A, B... J of the shape components when setting the splitting point. Therefore, in the case of a splitting as shown in Fig. 7, the primary machining cutting zone 5 is made about 15% larger than the secondary machining cutting zone 6, and in the case of the splitting as shown in Fig. 8, the primary machining cutting zone 5 is made about 20% smaller than the secondary machining cutting zone 6.

Consequently, the machining times required for the primary and the secondary machining cutting cannot be made the same, and thus machining efficiency cannot be improved.

Disclosure of the Invention

The present invention has been made in view of the aforesaid drawbacks, and an object of the present invention is to provide a method of preparing an NC program for an interactive numerical control device or an automatic programming device by which the times required for a primary machining and a secondary machining can be made the same.

To achieve the above object, in accordance with the present invention, there is provided a method of preparing an NC program for an interactive numerical control device or an automatic programming device for preparing the NC program for a part for which a secondary machining is carried out after a primary machining thereof, using a four-axis lathe with two spindles and two turrets, based on a material shape and a part shape of the above part, the method of preparing an NC program for an interactive numerical control device or an automatic programming device being characterized in that a splitting point between the primary machining and the secondary machining is determined based on data of the material shape and the part shape consisting of shape components input by the interactive numerical control device or the automatic programming device, and the NC program for the primary machining and the secondary machining is prepared such that times required for the primary machining and the secondary machining are almost the same, taking the above splitting point as the basis.

The material shape and the part shape are input to the interactive numerical control device or the automatic programming device using symbolic keys representing the shape components, and the entire machining zone to be machined in the primary machining and the secondary machining can be calculated from data of these material and part shapes. Namely, when an area of the part shape is subtracted from an area of the material shape, the remaining section is the area of the entire machining zone. Also, the length of the shape components, etc. constituting the part shape can be calculated based on the data of the material and the part shapes, and therefore, the splitting point between the primary machining and the secondary machining is determined by the area of the entire machining zone, the area of the part shape or the length, etc. of the shape components constituting the part shape calculated based on the data of the material and the part shapes, and the NC program for the primary machining and the secondary machining in which the times required for the primary machining and the secondary machining are almost the same is prepared on the basis of this splitting point.

Brief Description of the Drawings

Fig. 1 is a flow chart of a process of this embodiment;

Fig. 2 is a diagram showing an interactive numerical control device as an embodiment of the present invention;

Fig. 3 is a diagram showing an example of a display screen of an interactive numerical control device as an embodiment of the present invention;

Fig. 4 is another flow chart of a process of this embodiment;

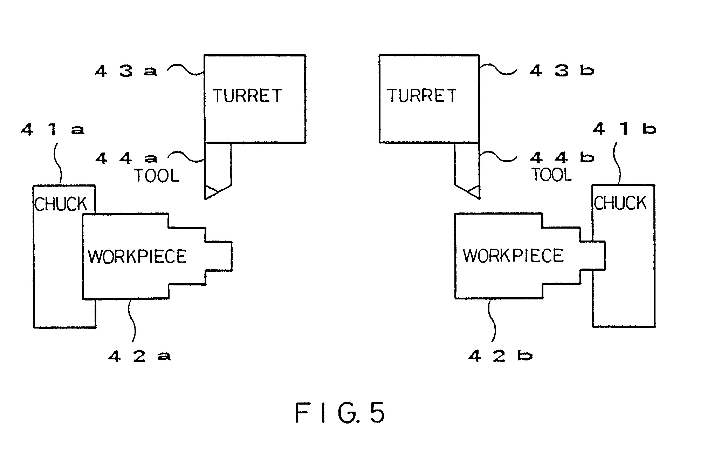

Fig. 5 is a diagram for explaining the outline of a machining with a four-axis lathe having two spindles and two turrets;

Fig. 6 is a diagram showing a material shape and a part shape input with symbolic keys; and

Fig. 7 and Fig. 8 are diagrams showing displays at display screens when cutting zones for a primary and a secondary machining are set.

Best Mode of Carrying Out the Invention

An embodiment of the present invention will hereinafter described with reference to the drawings.

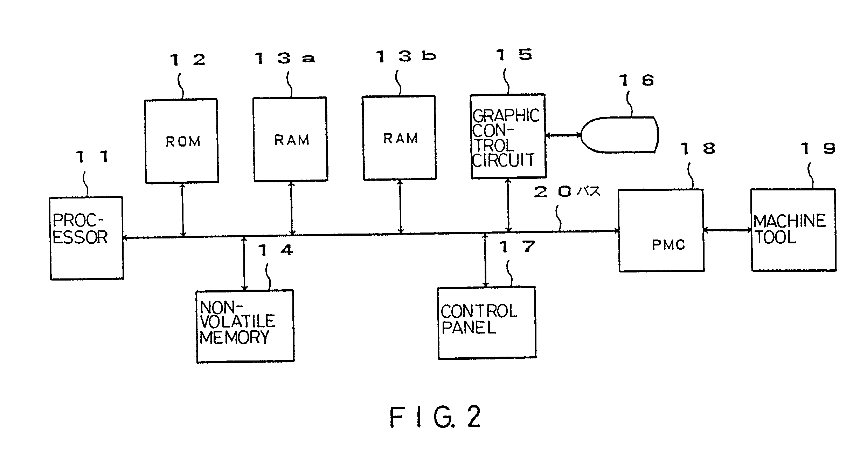

Figure 2 is a schematic diagram of a constitution of an interactive numerical control device as an embodiment of the present invention, wherein a processor 11 controls the operation of the whole interactive numerical control device according to a system program stored in a ROM 12, which is an EPROM or EEPROM. A DRAM or the like is used for a RAM 13, and various data or input/output signals are stored therein. A CMOS backed up by a battery is used for a nonvolatile memory 14, and parameters, pitch error correction amounts, tool correction amounts, etc., which must be held after the power supply is cut off, are stored therein.

A graphic control circuit 15 converts a digital signal to a display a signal and supplies it to a display unit 16. A CRT or a liquid crystal display unit is used for the display unit 16, and a material shape, part shape, machining definition screen, and positional indications of respective axes, parameters, etc. are displayed thereat. A control panel 17 is constituted by a keyboard, etc. and is used for inputting various data or for an operation of a machine tool 19.

A PMC (programmable machine controller) 18 receives an output signal via a bus 20, processes the output signal by a sequence program, and controls the machine tool 19 accordingly, and further, receives an input signal from a machine, processes the input signal by a sequence program, and transfers the processed input signal to the processor 11 via the bus 20.

Those components are interconnected by the bus 20.

Note, components such as an axis control circuit, servo amplifier, servo motor, spindle amplifier, spindle motor, etc. have been omitted in Fig. 2, and further, a plurality of processors may be used to thus constitute a multiprocessor system.

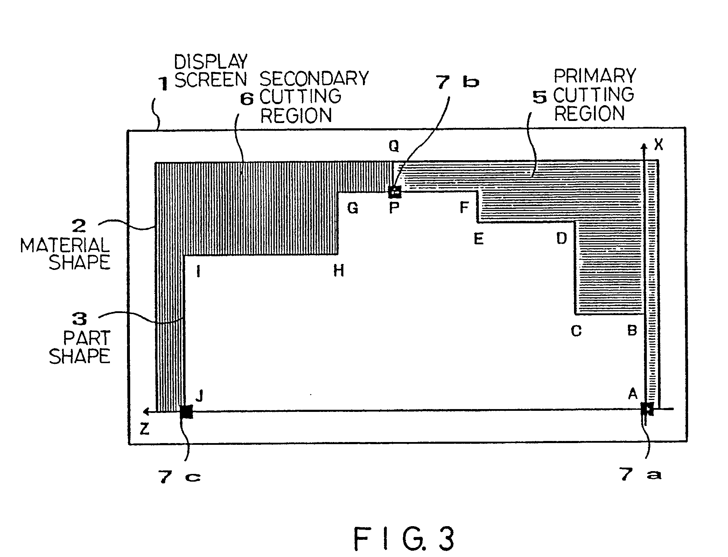

Figure 3 is a diagram showing an example of a display screen of an interactive numerical control device as an embodiment of the present invention. In Fig. 3, the same symbols are given to the same components shown in Fig. 7, and thus an explanation thereof will be omitted.

In this embodiment, a splitting point can be set at an arbitrary point on the shape components. Namely, the splitting point could be set only at the intersections A, B... J of the shape components in the conventional art, but in this embodiment, a cursor can be moved to an arbitrary point P between the points F and G of the shape components, and thus a point such that areas of a primary machining cutting zone 5 and a secondary machining cutting zone 6 are made equal to each other can be set as the splitting point. If a cursor can be moved to an arbitrary point on the entire shape components, the positions of all those points must be stored, and therefore in this embodiment, the cursor is arbitrarily moved only on the shape components at which the splitting point exists.

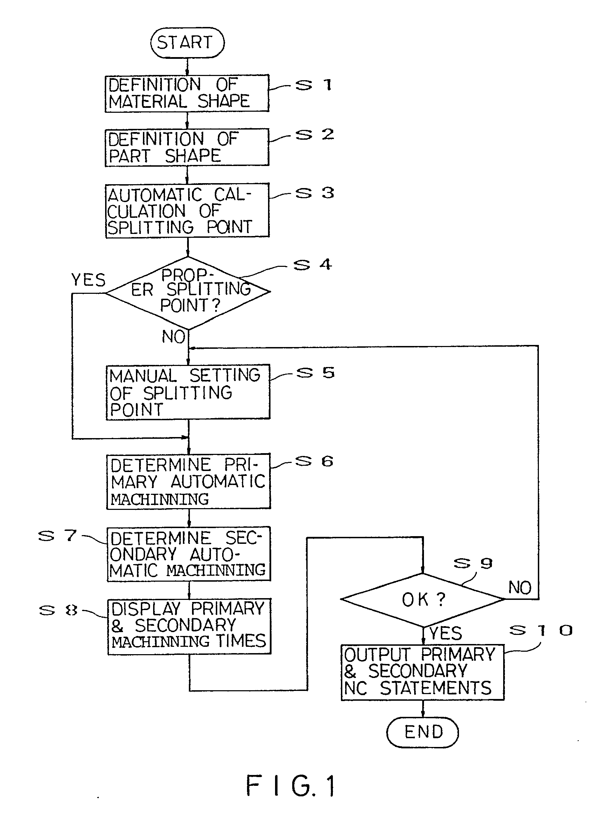

The operation according to the present embodiment will be explained with reference to the drawings. Figure 1 shows a flow chart of the process of this embodiment. In this figure, numerical values following the letter S show the number of the Step.

[S1] The material shape 2 is defined.

[S2] The part shape 3 is defined.

[S3] After the material shape 2 and the part shape 3 are defined, the position of the splitting point P in Fig. 3 is calculated based on the defined shapes, and a display as shown in Fig. 3 is shown on the display unit 16. In this Step, the entire machining zone to be cut, based on the material shape 2 and the part shape 3, is calculated, and a point such that areas of both the primary and the secondary machining are equal when an area of the entire machining zone is split by a line segment perpendicular to the Z-axis of the four-axis lathe is made the splitting point P between the primary and the secondary machining, and thus the primary machining cutting zone 5 and the secondary machining cutting zone 6 are determined on the basis of this splitting point P. Accordingly, the calculated splitting point P is a point such that the areas of the primary machining cutting zone 5 and the secondary machining cutting zone 6 are equal to each other.

[S4] The display unit 16 displays a query asking the operator whether or not the displayed splitting point P is correct, and the processing is divided according to a response given by the operator through the control panel 17. If the splitting point P calculated in S3 is correct, the process goes to S5, and if not, the process goes to S6.

[S5] The splitting point P calculated in S3 is again manually set by moving a cursor.

[S6] A machining process (machining program) for the primary machining cutting zone 5 specified on the basis of the splitting point P is automatically determined in the interactive numerical control device.

[S7] A machining process (machining program) for the secondary machining cutting zone 6 specified on the basis of the splitting point P is automatically determined in the interactive numerical control device.

[S8] The times required for the primary and the secondary machining, based on the machining processes determined in S6 and S7, are displayed by the display unit 16, together with a query asking the operator whether or not the machining times are appropriate. As the splitting point P calculated in S3 is simply selected such that the areas of the primary machining cutting zone 5 and the secondary machining cutting zone 6 are made equal, the machining time actually required for the primary machining and the secondary machining can not be made the same unless the machining times are calculated by taking into account the type of machining process, etc.

[S9] When the operator determines that the machining times displayed on the display unit 16 are appropriate, and thus inputs "YES" through the control panel 17, the process goes to S10, and when "NO" is input, the process returns to S5 to reset the splitting point P, and S6, S7 and S8 are repeated.

[S10] When the displayed machining times are appropriate, the NC program (NC sentence) is output based on this splitting point P.

In the above flow chart, the operator determines whether or not the machining times are appropriate by checking the displayed machining times, but whether or not the machining times are appropriate may be determined in the interactive numerical control device or the automatic programming device.

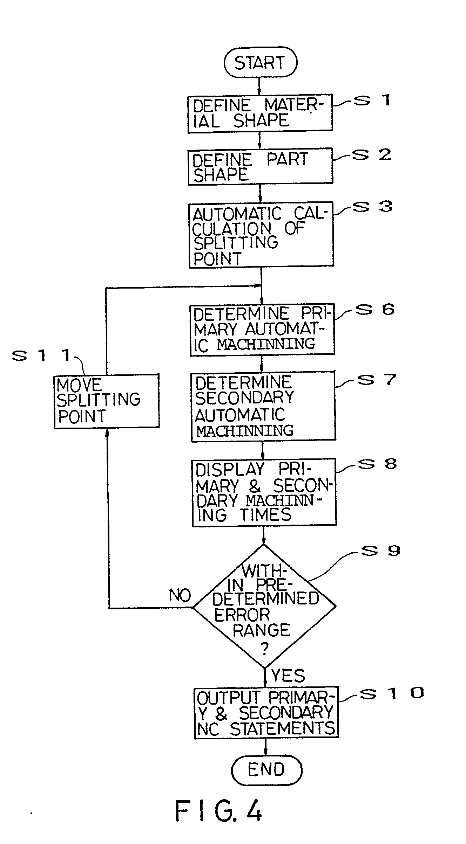

Figure 4 is another flow chart showing the operation of this embodiment. In Fig. 4, as the same symbols are given to the same Steps of Fig. 3, an explanation thereof will be omitted.

In this flow chart, S4 and S5 in Fig. 3 are omitted, the determination in S9 is changed, and S11 is added.

[S9] It is determined whether or not a difference between the time required for the primary machining and the time required for the secondary machining is within $!^{\wedge}5\%$ of the entire machining time (sum of the primary and the secondary machining time), and if the difference is within $!^{\wedge}5\%$, the process goes to S10, and the NC sentence is output. If the difference is more than $!^{\wedge}5\%$, the process goes to S11.

In this flow chart, the determination is made of whether or not the difference between the time required for the primary machining and the time required for the secondary machining is within a predetermined error range of $!^{\wedge}5\%$, but it can be determined whether or not the difference between the time required for the primary machining and the time required for the secondary machining is within a predetermined time (e.g., one to three minutes), and such an error range or time range is set as a parameter.

[S11] The splitting point is changed and moved by a predetermined amount so that the machining zone of the machining needing a longer machining time is made smaller. In this case, a predetermined amount of change and movement is determined according to the size of the difference between the time required for the primary machining and the time required for the secondary machining obtained in S9. For example, when the machining time for the primary machining is longer than that of the secondary machining, by about 10%, the change and movement is made such that the area of the primary machining cutting zone 5 is made smaller by about 10%. Accordingly, the difference between the time required for the primary machining and the time required for the secondary machining is brought within the above error range or time range.

As described above, in this flow chart, the splitting point is automatically calculated so that the machining time is the same for the primary and the secondary machining, and the NC sentence is output based on the calculated splitting point.

In the above embodiment, the material shape and the part shape are both observed as cross sectional areas at the display screen, the entire machining area to be machined is calculated from the data of the material shape and the part shape, and a point is made the splitting point such that both of these areas become almost equal when the area of the entire machining zone is split with a line segment perpendicular to the Z-axis of the four-axis lathe.

This method of calculating the splitting point is merely an example, and the splitting point also can be calculated by the following method.

Namely, a point such that both areas are equal to each other when the area of the part shape 3 is split with the line segment perpendicular to the Z-axis of the four-axis lathe can be made the splitting point.

Also, a point such that the lengths of the shape components A - B - C - D - E - F - G - H - I - J constituting the part shape 3 are equal to each other can be made the splitting point.

Moreover, the middle point of the shape component F - G having a distance in the radial X direction that is the longest among the shape components A - B - C - D - E - F - G - H - I - J constituting the part shape 3, can be made the splitting point.

Furthermore, a point at about half the length in the Z-axis direction of the material shape 2 or the part shape 3 can be made the splitting point.

As mentioned above, a number of points can be set as the splitting point, and any one of those splitting points can be set as a parameter, or after calculating the machining time for all of those splitting points, a point such that the time required for the primary machining and the time required for the secondary machining are substantially the same can be made the splitting point.

Although the case of an interactive numerical control device was described for the embodiments, this invention can be similarly applied to an automatic programming device.

According to the present invention, as described above, a primary machining program and a secondary machining program of an NC program for a four-axis lathe having two spindles and two turrets are produced at the same time, and the primary machining time and the secondary machining time can be made the same, to thereby significantly improve the machining efficiency.

**Claims**

1. In a method of preparing an NC program for an interactive numerical control device or an automatic programming device, for preparing an NC program for a part for which a secondary machining is carried out after a primary machining thereof, with a four-axis lathe having two spindles and two turrets, based on a material shape and a part shape of the part,

   00wherein a splitting point between the primary machining and the secondary machining is determined on the basis of data of the material shape and the part shape consisting of shape components input by the interactive numerical control device or the automatic programming device, and the NC program for the primary machining and the secondary machining is prepared such that times required for the primary machining and the secondary machining are almost the same, on the basis of the splitting point.

2. In a method of preparing an NC program for an interactive numerical control device or an automatic programming device according to claim 1, wherein in a method of preparing an NC program for an interactive numerical control device or an automatic programming device for preparing the NC program for a part for which a secondary machining is carried out after a primary machining, with a four-axis lathe having two spindles and two turrets, based on a material shape and a part shape of the part,

   the NC program for the primary machining and the secondary machining is prepared such that times required for the primary machining and the secondary machining are almost the same, the method comprising:

   a first step of calculating an entire machining zone to be machined in the primary machining and secondary machining, from data of the material shape and the part shape;

   a second step of making a splitting point between the primary machining and secondary machining such that, when an area of the entire machining zone is split with a line segment perpendicular to a Z-axis of the four-axis lathe, both areas are equal to each other; and

   a third step of determining a primary machining zone to be machined in the primary machining and a secondary machining zone to be machined in the secondary machining, on the basis of the splitting point.

3. A method of preparing an NC program for an interactive numerical control device or an automatic programming device according to claim 1, wherein, in a method of preparing an NC program for an interactive numerical control device or an automatic programming device for preparing the NC program for a part for which a secondary machining is carried out after a primary machining, with a four-axis lathe having two spindles and two turrets, based on a material shape and a part shape of the part,

   the NC program for the primary machining and the secondary machining is prepared such that times required for the primary machining and the secondary machining are almost the same, the method comprising:

   a first step of calculating an entire machining zone to be machined in the primary machining and secondary machining from the data of the material shape and the part shape;

   a second step of making a splitting point between the primary machining and secondary machining such that, when an area of the entire machining zone is split with a line segment perpendicular to a Z-axis of said four-axis lathe, both areas are equal to each other;

   a third step in which the splitting point can be manually changed;

   a fourth step of determining a primary machining zone to be machined in the primary machining and a secondary machining zone to be machined in the secondary machining on the basis of the splitting point;

   a fifth step of determining machining processes of the primary machining and the secondary machining, based on the primary machining zone and the secondary machining zone;

   a sixth step of calculating times required for the primary machining and the secondary machining and displaying such times; and

   a seventh step in which an input of whether or not the displayed times required for the primary machining and the secondary machining are appropriate is received, and if the input is appropriate, the NC program for the primary machining and the secondary machining is output, and if the input is inappropriate, the process returns to the third step thereof.

4. A method of preparing an NC program for an interactive numerical control device or an automatic programming device according to claim 1, wherein, in a method of preparing an NC program for an interactive numerical control device or an automatic programming device for preparing the NC program for a part for which a secondary machining is carried out after a primary machining, with a four-axis lathe having two spindles and two turrets, based on a material shape and a part shape of the part,

the NC program of the primary machining and the secondary machining is prepared such that times required for the primary machining and the secondary machining are almost the same, the method comprising:

a first step of calculating an entire machining zone to be machined in the primary machining and secondary machining, from the data of the material shape and the part shape;

a second step for making a splitting point between the primary machining and secondary machining such that, when an area of the entire machining zone is split with a line segment perpendicular to a Z-axis of the four-axis lathe, both areas are equal to each other;

a third step of determining a primary machining zone to be machined in the primary machining and a secondary machining zone to be machined in the secondary machining on the basis of the splitting point;

a fourth step of determining machining processes of the primary machining and the secondary machining, based on the primary machining zone and the secondary machining zone;

a fifth step of calculating times required for the primary machining and the secondary machining and displaying same;

a sixth step in which it is determined whether or not a difference between a time required for the primary machining and a time required for the secondary machining is within a predetermined range;

a seventh step of outputting the NC program for the primary machining and the secondary machining when the difference is within the predetermined range; and

an eighth step in which, when the difference is not within the predetermined range, the splitting point is changed and brought within the predetermined range, and the process returns to the third step.

5. A method of preparing an NC program for an interactive numerical control device or an automatic programming device according to any one of claims 2, 3 and 4, wherein the splitting point is made such that, when an area of the part shape is split with a line segment perpendicular to a Z-axis of the four axis lathe, both areas are equal to each other.

6. A method of preparing an NC program for an interactive numerical control device or an automatic programming device according to any one of claims 2, 3 and 4, wherein the splitting point is made such that the lengths of the shape components constituting the part shape are equal to each other.

7. A method of preparing an NC program for an interactive numerical control device or an automatic programming device according to any one of claims 2, 3 and 4, wherein a middle point of the shape component having the longest distance in the radial direction among the shape components constituting the part shape is made the splitting point.

8. A method of preparing an NC program for an interactive numerical control device or an automatic programming device according to any one of claims 2, 3 and 4, wherein a point at about half the length in the Z-axis direction of the material shape or the part shape is made the splitting point.

FIG.1

FIG. 2

EP 0 453 570 A1

FIG. 3

FIG. 4

EP 0 453 570 A1

43a ~ | TURRET |   | TURRET | ~ 43b

41a

44a ~ TOOL

44b TOOL ~ 41b

| CHUCK |

WORKPIECE

WORKPIECE

| CHUCK |

42a

42b

FIG. 5

**1** DISPLAY SCREEN

CUTTING
**4** REGION

**2** MATERIAL SHAPE

**3** PART SHAPE

X

G     F

E     D

I     H

C    B

J     A

Z

FIG. 6

FIG. 7

F I G. 8

# INTERNATIONAL SEARCH REPORT

International Application No PCT/JP90/01376

## I. CLASSIFICATION OF SUBJECT MATTER (if several classification symbols apply, indicate all) ⁶

According to International Patent Classification (IPC) or to both National Classification and IPC

Int. Cl⁵  G05B19/403, 19/18

## II. FIELDS SEARCHED

Minimum Documentation Searched ⁷

| Classification System | Classification Symbols |
|---|---|
| IPC | G05B19/403, 19/18 |

Documentation Searched other than Minimum Documentation
to the Extent that such Documents are Included in the Fields Searched ⁸

| | |
|---|---|
| Jitsuyo Shinan Koho | 1926 - 1990 |
| Kokai Jitsuyo Shinan Koho | 1971 - 1990 |

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| A | JP, A, 62-251044 (Fanuc Ltd.), October 31, 1987 (31. 10. 87), Line 16, lower right column, page 1 to line 1, lower right column, page 3 (Family: none) | 1-8 |
| P | JP, A, 02-62603 (Yamazaki Mazak Corp.), March 2, 1990 (02. 03. 90), Line 1, lower right column, page 3 to line 19, lower left column, page 4 (Family: none) | 1-8 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| January 29, 1991 (29. 01. 91) | February 18, 1991 (18. 02. 91) |

| International Searching Authority | Signature of Authorized Officer |
|---|---|
| Japanese Patent Office | |

Form PCT/ISA/210 (second sheet) (January 1985)